# EUROPÄISCHE PATENTANMELDUNG

(11) **EP 4 186 678 A1**
(43) Veröffentlichungstag der Anmeldung: **31.05.2023**
(21) Anmeldenummer: 22200788.2
(22) Anmeldetag: 11.10.2022
(51) Int. Cl.: B29C 48/00, B29C 48/07, B29C 48/18, B29C 48/22, B29C 48/30, B29C 48/91, B29D 30/62

(54) **VERFAHREN ZUR COEXTRUSION VON KAUTSCHUKPRODUKTEN MIT VERBESSERTER VERBUNDFESTIGKEIT**

(30) Priorität: 25.10.2021 DE 102021211997
(71) Anmelder: Continental Reifen Deutschland GmbH, 30165 Hannover (DE)
(72) Erfinder: Sharifi, Monir, 30165 Hannover (DE)
(74) Vertreter: Continental Corporation

(57) **Zusammenfassung**

Die Erfindung betrifft Die Erfindung betrifft ein Verfahren zur Coextrusion eines vulkanisierbaren Kautschukprodukts mit einem Extruder, umfassend die Verfahrensschritte: a) Herstellen oder Bereitstellen einer ersten vulkanisierbaren Kautschukmischung und einer zweiten vulkanisierbaren Kautschukmischung, b) Vorformen der ersten vulkanisierbaren Kautschukmischung durch eine erste Ausformungsöffnung einer Vorschablone und Vorformen der zweiten vulkanisierbaren Kautschukmischung durch eine zweite Ausformungsöffnung der Vorschablone, c) Kontaktieren der vorgeformten Kautschukmischungen in einer der Vorschablone nachgelagerten Endschablone des Extruders zur Ausbildung einer Grenzfläche zwischen den Kautschukmischungen, und d) Extrudieren des vulkanisierbaren Kautschukprodukts umfassend die erste vulkanisierbare Kautschukmischung und die zweite vulkanisierbare Kautschukmischung, wobei die erste Ausformungsöffnung und die zweite Ausformungsöffnung in der Vorschablone durch ein Strukturelement voneinander getrennt sind, wobei das Strukturelement auf beiden Seiten eine zueinander komplementäre makroskopische Struktur aufweist, und wobei das Strukturelement dazu eigerichtet ist, in die durch die Ausformungsöffnungen extrudierten vulkanisierbaren Kautschukmischungen komplementäre makroskopische Strukturen einzuprägen, so dass diese im Querschnitt durch das vulkanisierbare Kautschukprodukt eine makroskopisch strukturierte Grenzfläche miteinander aufweisen.

## Beschreibung

Die Erfindung betrifft ein Verfahren zur Coextrusion eines vulkanisierbaren Kautschukprodukts mit einem Extruder, ein darauf aufbauendes Verfahren zur Herstellung eines vulkanisierten Kautschukprodukts sowie ein vulkanisierbares Kautschukprodukt ein vulkanisiertes Kautschukprodukt und einen Fahrzeugreifen.

Zahlreiche industriell relevante Kautschukprodukte bestehen nicht lediglich aus einer vulkanisierten Kautschukmischung, d. h. einem Gummiwerkstoff, sondern greifen zur Optimierung der Produkteigenschaften bei der Herstellung auf zwei oder mehrere verschiedene vulkanisierbare Kautschukmischungen zurück, um damit ein Kautschukprodukt zu schaffen, welches nach der Vulkanisation unterschiedliche Gummiwerkstoffe umfasst, mit denen sich die physikalisch-chemischen Eigenschaften des Kautschukprodukts spezifisch an die jeweiligen Anforderungen der Anwendung anpassen lassen. Entsprechende Kautschukprodukte werden regelmäßig durch die sogenannte Coextrusion von Kautschukmischungen hergestellt. Bei der Coextrusion von Kautschukmischungen werden diese über die sogenannte Vorschablone in die Endschablone geführt, wo sie dann mit hohem Druck zu dem finalen Kautschukprodukt zusammengeführt werden.

Bei diesem Vorgang entsteht im Kontaktbereich der beiden extrudierten Kautschukmischungen eine Grenzschicht, durch die die mittels Vulkanisation aus den jeweiligen vulkanisierbaren Kautschukmischungen erhaltenen Gummiwerkstoffe getrennt werden. Im Bereich der Grenzschicht unterscheiden sich die im Zuge der Vulkanisation vernetzten Strukturen entsprechend von denen, die im Kern der jeweiligen Kautschukmischungen gebildet werden. Während die mechanischen Eigenschaften des entstehenden Kautschukprodukts innerhalb der verschiedenen Kautschukmischungen vor allem durch die Kohäsion bedingt werden, ist die Adhäsion bzw. die Verbundfestigkeit zwischen den beiden coextrudierten Kautschukmischungen im Bereich der Grenzschicht eine potentielle Separations- bzw. Bruchstelle. Eine wesentliche Rolle bei der Bestimmung der Verbundfestigkeit zwischen den coextrudierten Kautschukmischungen kommt dabei dem Schritt der Covulkanisation der beiden vulkanisierbaren Kautschukmischungen zu.

Es war die Aufgabe der vorliegenden Erfindung, die Covulkanisation von zwei vulkanisierbaren Kautschukmischungen, welche gemeinsam ein Kautschukprodukt bilden, zu verbessern.

Insoweit war es die Aufgabe der vorliegenden Erfindung, ein Verfahren zur Coextrusion von Kautschukprodukten anzugeben, welches in Kautschukprodukten mit verbesserter Verbundfestigkeit resultiert, wobei insbesondere die Verbundfestigkeit zwischen den unterschiedlichen Gummiwerkstoffen verbessert werden sollte.

Die Erfinder der vorliegenden Erfindung haben nunmehr gefunden, dass sich die vorstehend definierten Aufgaben überraschenderweise lösen lassen, wenn die Größe der Grenzfläche zwischen den beiden vulkanisierbaren Kautschukmischungen, d. h. die Größe des Kontaktbereichs zwischen den beiden vulkanisierbaren Kautschukmischungen, welche sich am Ende der Coextrusion im Kautschukprodukt ergibt, durch geeignete Maßnahmen erhöht wird, wie es in den Ansprüchen definiert ist.

Die Erfinder haben insoweit gefunden, dass dies effizienterweise in einem Verfahren zur Coextrusion von vulkanisierbaren Kautschukprodukten überraschenderweise durch eine spezielle Ausführung der Vorschablone realisiert werden kann. Durch die so erreichte Steigerung der Kontaktfläche im Grenzbereich wird das Ausmaß der Covulkanisation der beiden Kautschukmischungen erhöht, sodass in dem für die Verbundfestigkeit regelmäßig maßgeblichen Grenzbereich mehr Vernetzungen zwischen den verschiedenen Kautschukmischungen ausgebildet werden können. Die Erfinder haben dabei erkannt, dass hierdurch in synergistischer Weise zudem eine makroskopische Verzahnung zwischen den verschiedenen vulkanisierbaren Kautschukmischungen erreicht wird, die im späteren vulkanisierten Kautschukprodukt zu einer in synergistischer Weise gesteigerten Verbundfestigkeit führt.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter vulkanisierbarer Kautschukprodukte, vulkanisierter Kautschukprodukte und Fahrzeugreifen ergeben sich aus den Merkmalen bevorzugter Verfahren.

Die Erfindung betrifft ein Verfahren zur Coextrusion eines vulkanisierbaren Kautschukprodukts mit einem Extruder, umfassend die Verfahrensschritte:
a) Herstellen oder Bereitstellen einer ersten vulkanisierbaren Kautschukmischung und einer zweiten vulkanisierbaren Kautschukmischung,
b) Vorformen der ersten vulkanisierbaren Kautschukmischung durch eine erste Ausformungsöffnung einer Vorschablone und Vorformen der zweiten vulkanisierbaren Kautschukmischung durch eine zweite Ausformungsöffnung der Vorschablone,
c) Kontaktieren der vorgeformten Kautschukmischungen in einer der Vorschablone nachgelagerten Endschablone des Extruders zur Ausbildung einer Grenzfläche zwischen den Kautschukmischungen, und
d) Extrudieren des vulkanisierbaren Kautschukprodukts umfassend die erste vulkanisierbare Kautschukmischung und die zweite vulkanisierbare Kautschukmischung,

wobei die erste Ausformungsöffnung und die zweite Ausformungsöffnung in der Vorschablone durch ein Strukturelement voneinander getrennt sind, wobei das Strukturelement auf beiden Seiten eine zueinander komplementäre makroskopische Struktur aufweist, und
wobei das Strukturelement dazu eigerichtet ist, in die durch die Ausformungsöffnungen extrudierten vulkanisierbaren Kautschukmischungen komplementäre makroskopische Strukturen einzuprägen, so dass diese im Querschnitt durch das vulkanisierbare Kautschukprodukt eine makroskopisch strukturierte Grenzfläche miteinander aufweisen.

Das erfindungsgemäße Verfahren wird mit einem Extruder durchgeführt. Entsprechende Vorrichtungen sind dem Fachmann grundsätzlich bekannt und können im Lichte der Lehre der vorstehenden Erfindung vom Fachmann leicht umgerüstet werden, um das erfindungsgemäße Verfahren durchzuführen. Bevorzugt ist insoweit ein erfindungsgemäßes Verfahren, wobei der Extruder ein Schneckenextruder mit zwei oder mehr Schneckenwellen ist.

In dem erfindungsgemäßen Verfahren werden eine erste und eine zweite vulkanisierbare Kautschukmischung hergestellt, beispielsweise in einem vorgeschalteten Mischer, oder bereitgestellt, beispielsweise durch Bezug von einem Zulieferer. Für den Fachmann ist verständlich, dass es sich bei der ersten und der zweiten vulkanisierbaren Kautschukmischung in der weit überwiegenden Zahl der Fälle um unterschiedliche vulkanisierbare Kautschukmischungen handeln wird, da anderenfalls eine Coextrusion grundsätzlich wenig effizient wäre.

Die beiden vulkanisierbaren Kautschukmischungen werden, noch separat voneinander, in der Vorschablone vorgeformt, die zu diesem Zweck zumindest zwei Ausformungsöffnungen umfasst. Die erste und zweite Ausformungsöffnung werden dabei regelmäßig Teil der gleichen Vorschablone sein, die zumeist einstückig ausgeführt wird. Es ist jedoch auch möglich, die Vorschablone mehrteilig auszuführen, sodass die erste Ausformungsöffnung in einem ersten Teil und die zweite Ausformungsöffnung in einem zweiten Teil der Vorschablone angeordnet ist.

In dem erfindungsgemäßen Verfahren werden die derart vorgeformten Kautschukmischungen anschließend in einer sogenannten Endschablone miteinander kontaktiert, sodass eine Grenzfläche zwischen den beiden Kautschukmischungen ausgebildet wird. Das durch Kontaktieren der vorgeformten Kautschukmischungen geformte vulkanisierbare Kautschukprodukt wird anschließend aus der Endschablone ausgeleitet, was vorliegend als Extrudieren des vulkanisierbaren Kautschukprodukts bezeichnet wird. Das vorstehend beschriebene Verfahren ist dem Fachmann dabei aus dem Stand der Technik grundsätzlich bekannt und kann von diesem zwanglos umgesetzt werden. Der Fachmann versteht, dass insoweit ein erfindungsgemäßes Verfahren bevorzugt ist, wobei das vulkanisierbare Kautschukprodukt strangförmig ist.

In dem erfindungsgemäßen Verfahren ist jedoch nunmehr die Vorschablone in spezifischer Form ausgebildet. Diese umfasst nämlich ein

Strukturelement, welches in dem Bereich zwischen der ersten und der zweiten Ausformungsöffnung liegt, sodass die durch die Ausformungsöffnung geführten Kautschukmischungen in der Vorschablone durch das Strukturelement voneinander separiert werden. Das erfindungsgemäß vorzusehende Strukturelement, bei dem es sich beispielsweise um den Steg zwischen der ersten und zweiten Ausformungsöffnung handeln kann, weist in dem erfindungsgemäßen Verfahren eine spezifische makroskopische Struktur auf. Dabei ist das Strukturelement so ausgebildet, dass es auf beiden Seiten, d.h. im Bereich der ersten und zweiten Ausformöffnung, eine komplementäre makroskopische Struktur aufweist.

In Übereinstimmung mit dem fachmännischen Verständnis bedeutet der Ausdruck makroskopische Struktur im Rahmen der vorliegenden Erfindung, dass die Struktur mit dem bloßen Auge sichtbar ist, was regelmäßig im Zweifel dann der Fall ist, wenn die makroskopische Struktur Hoch- und Tiefpunkte aufweist, deren Höhendifferenz mehr als 0,5 mm beträgt.

Die makroskopischen Strukturen auf beiden Seiten des Strukturelements sind dabei komplementär ausgebildet. Im Rahmen der vorliegenden Erfindung bedeutet der Ausdruck komplementär, dass die Kontur der Struktur auf einer Seite des Strukturelements der Kontur der Struktur auf der anderen Seite des Strukturelements entspricht, so dass diese durch bloße Verschiebung miteinander zur Deckung gebracht bzw. auf einander abgebildet werden können. Der Fachmann erkennt, dass es zur Realisierung der nachfolgend beschriebenen Einprägung der Strukturen dabei prinzipiell möglich ist, dass die komplementären makroskopischen Strukturen auf den Seiten des Strukturelements zueinander versetzt oder zueinander verdreht sein können, wobei dies eher wenig bevorzugt ist, da es erfordern würde, dass die vorgeformten Stränge der vulkanisierbaren Kautschukmischungen nach der Vorschablone noch zueinander orientiert bzw. versetzt werden müssen.

Es ist jedoch explizit bevorzugt, wenn die komplementären makroskopischen Strukturen auf beiden Seiten des Strukturelements so angeordnet sind, dass die Breite des Strukturelements über die Länge des Strukturelements im Wesentlichen konstant bleibt. Der Fachmann versteht insoweit, dass leichte Abweichungen in der Breite des Strukturelements oder in der Kontur der Struktur, wie sie beispielsweise durch Fertigungstoleranzen auftreten können, nicht dazu führen, dass es sich aus fachmännischer Sicht um eine komplementäre makroskopische Struktur handelt.

Der Sinn und Zweck des derart strukturierten Strukturelements ist es, die durch die Vorschablone geführten vulkanisierbaren Kautschukmischungen vorzuprägen, nämlich in der Art, dass die komplementären makroskopischen Strukturen des Strukturelements quasi als negativ in die Materialstränge eingeprägt werden. Der Fachmann versteht, dass hierdurch am Auslass der Vorschablone zumindest zwei Materialstränge erhalten werden, die in dem späteren Kontaktbereich über eine Strukturierung verfügen, die derart aufeinander abgestimmt ist, dass die Struktur im ersten Strang quasi dem Negativ der Struktur im zweiten Materialstrang entspricht, sodass die extrudierten vulkanisierbaren Kautschukmischungen im Wesentlichen formschlüssig miteinander zusammengeführt werden können.

In dem so resultierenden vulkanisierbaren Kautschukprodukt ergibt sich somit eine strukturierte Grenzfläche, die die makroskopische Struktur aufweist, die durch das Strukturelement vorgegeben wird.

Dem Erfinder ist es ausgehend von diesem Grundkonzept gelungen, besonders bevorzugte Strukturelemente für die makroskopische Struktur zu identifizieren, die beim Einsatz von üblichen vulkanisierbaren Kautschukmischungen nicht nur eine ausgezeichnete Verarbeitbarkeit ermöglichen, sondern zudem auch in Kautschukprodukten resultieren, die, bedingt durch die große Oberfläche der Grenzfläche, eine ausgezeichnete Verbundfestigkeit aufweisen. Bevorzugt ist nämlich ein erfindungsgemäßes Verfahren, wobei das Strukturelement zumindest abschnittsweise, bevorzugt vollständig, ein wellenförmiger oder stufenförmiger oder zickzackförmiger Steg, bevorzugt ein zickzackförmiger Steg, ist, wobei das Strukturelement dazu eigerichtet ist, in die extrudierten vulkanisierbaren Kautschukmischungen komplementäre wellenförmige oder stufenförmige oder zickzackförmige Strukturen einzuprägen, so dass diese im Querschnitt durch das vulkanisierbare Kautschukprodukt eine wellenförmig oder stufenförmig oder zickzackförmig strukturierte Grenzfläche miteinander aufweisen.

Bevorzugt ist auch ein erfindungsgemäßes Verfahren, wobei die makroskopische Struktur einen oder mehrere Hochpunkte und einen oder mehrere Tiefpunkte, bevorzugt mehrere Hochpunkte und mehrere Tiefpunkte, umfasst, wobei der Höhenunterschied zwischen zumindest einem Hochpunkt zumindest einem Tiefpunkt, bevorzugt zwischen einem Hochpunkt und einem benachbarten Tiefpunkt, besonders bevorzugt zwischen sämtlichen Hochpunkten und sämtlichen Tiefpunkten, im Bereich von 2 bis 12 mm, bevorzugt im Bereich von 2 bis 6 mm, besonders bevorzugt im Bereich von 2 bis 4 mm, liegt.

Bevorzugt ist zudem ein erfindungsgemäßes Verfahren, wobei die makroskopische Struktur einen oder mehrere Hochpunkte, bevorzugt mehrere Hochpunkte, umfasst, wobei der Abstand zwischen zwei benachbarten Hochpunkten, bevorzugt der mittlere Abstand zwischen benachbarten Hochpunkten, Bereich von 3 bis 12 mm, bevorzugt im Bereich von 3 bis 8 mm, besonders bevorzugt im Bereich von 3 bis 5 mm, liegt.

Der Erfinder hat insoweit erkannt, dass eine besonders hohe Verbundfestigkeit erreicht werden kann, wenn das Kontaktieren der erfindungsgemäß vorgeprägten Materialstränge unter einem besonders hohen Druck erfolgt, was zu einer besonders effizienten Verbindung der verschiedenen vulkanisierbaren Kautschukmischungen an der Grenzfläche führt. Bevorzugt ist deshalb ein erfindungsgemäßes Verfahren, wobei das Kontaktieren in der Endschablone unter einem erhöhten Druck, bevorzugt von 150 bar oder mehr, besonders bevorzugt 120 bar oder mehr, erfolgt.

Auch wenn das erfindungsgemäße Verfahren im Wesentlichen mit allen Arten von vulkanisierbaren Kautschukmischungen ausführbar ist, konnte der Erfinder der vorliegenden Erfindung jedoch identifizieren, dass es im Bereich der sehr niedrigen und der sehr hohen Viskositäten deutlich erschwert sein kann, die notwendige makroskopische Struktur in die Materialien einzuprägen bzw. eine hinreichende Formstabilität bei der Verbindung zu gewährleisten, sodass die Vorteile des erfindungsgemäßen Verfahrens mit vulkanisierbaren Kautschukmischungen bestimmter Viskosität am besten ausgeschöpft werden können. Bevorzugt ist daher ein erfindungsgemäßes Verfahren, wobei die erste vulkanisierbare Kautschukmischung und/oder die zweite vulkanisierbare Kautschukmischung eine Mooney-Viskosität ML (1+3 / 100 °C) gemäß DIN 53523-2-1991 im Bereich von 20 bis 200 MU, bevorzugt im Bereich von 30 bis 140 MU, besonders bevorzugt im Bereich von 40 bis 120 MU, aufweisen.

Der Vorteil des erfindungsgemäßen Verfahrens macht sich nach Erkenntnis des Erfinders jedoch vor allen Dingen dann positiv bemerkbar, wenn die vulkanisierbaren Kautschukmischungen eine relativ hohe Viskositätsdifferenz aufweisen, und daher relativ unterschiedliche Verarbeitungseigenschaften aufweisen. Gerade bei diesem Vorgehen lassen sich durch die Vorstrukturierung der einzelnen vulkanisierbaren Kautschukmischungen in der Vorschablone trotz der hohen Viskositätsdifferenz vorteilhafterweise zuverlässig große Grenzflächen realisieren. Bevorzugt ist deshalb ein erfindungsgemäßes Verfahren, wobei die erste vulkanisierbare Kautschukmischung und die zweite vulkanisierbare Kautschukmischung eine Differenz der Mooney-Viskosität ML (1+3 / 100 °C) gemäß DIN 53523-2-1991 von 5 MU oder mehr, bevorzugt 10 MU oder mehr, besonders bevorzugt 20 MU oder mehr, aufweisen.

Grundsätzlich ist es möglich, dass das Strukturelement integraler Bestandteil der Vorschablone ist, beispielsweise, weil die Vorschablone einstückig ausgeführt wird oder sich das Strukturelement beim Zusammensetzen von zwei Einzelteilen der Vorschablone zu einer gemeinsamen Vorschablone als Steg zwischen den Ausformöffnungen ergibt. Dies ist häufig mit Blick auf eine kostengünstige Verfahrensführung vorteilhaft. Bevorzugt ist somit ein erfindungsgemäßes Verfahren, wobei das Strukturelement reversibel und zerstörungsfrei lösbar mit der Vorschablone verbunden ist.

Als besonders vorteilhafte alternative Variante wird es jedoch angesehen, wenn das Strukturelement reversibel und zerstörungsfrei lösbar mit der Vorschablone verbunden ist. Hierdurch ist es vorteilhafterweise möglich, bei Einsatz der ansonsten gleichen Vorschablone, welche beispielsweise bezüglich sämtlicher anderer Strukturelemente auf das herzustellende Kautschukprodukt zugeschnitten ist, lediglich die makroskopische Struktur zu verändern, um hierdurch die Oberfläche der Grenzfläche zielgenau an die jeweiligen Bedürfnisse der eingesetzten vulkanisierbaren Kautschukmischungen bzw. der späteren Anwendung des Kautschukprodukts anzupassen. Bevorzugt ist folglich ein erfindungsgemäßes Verfahren, wobei das Strukturelement integraler Bestandteil der Vorschablone ist.

Die mit dem erfindungsgemäßen Verfahren zu erreichende vorteilhafte Erhöhung der Grenzfläche zeigt sich besonders, wenn die Trennlinie zwischen den zwei Kautschukmischungen entlang der Richtung der kleinsten Breitenausdehnung verläuft, d. h. für solche Szenarien, in denen eine grundsätzlich kleine Kontaktfläche zwischen den zwei Kautschukmischungen vorgesehen ist. Eine entsprechende Ausgestaltung ergibt sich beispielsweise regelmäßig bei der Herstellung von Laufstreifen oder Seitenwänden für Fahrzeugluftreifen, sodass die anteilig besonders große Steigerung der Kontaktfläche im Grenzbereich besonders vorteilhaft ist. Bevorzugt ist deshalb ein erfindungsgemäßes Verfahren, wobei die makroskopisch strukturierte Grenzfläche im Querschnitt durch das vulkanisierbare Kautschukprodukt in eine Richtung verläuft, die quer zur Extrusionsrichtung und quer zur Richtung der größten Breitenausdehnung des vulkanisierbaren Kautschukprodukts verläuft. Bevorzugt ist entsprechend ein erfindungsgemäßes Verfahren, wobei die makroskopisch strukturierte Grenzfläche im Querschnitt durch das vulkanisierbare Kautschukprodukt quer zur Extrusionsrichtung vertikal von der Unterseite zur Oberseite des vulkanisierbaren Kautschukprodukts verläuft.

Grundsätzlich bevorzugt ist insbesondere ein erfindungsgemäßes Verfahren, wobei das vulkanisierbare Kautschukprodukt ein vulkanisierbares Seitenwandprofil oder ein vulkanisierbarer Laufstreifen, bevorzugt ein vulkanisierbares Seitenwandprofil, ist.

Die vorteilhafte Verbesserung der Coextrusion und die günstige Steigerung der Verbundfestigkeit wirken sich besonders stark aus, wenn mit dem erfindungsgemäßen Verfahren mehr als zwei vulkanisierbare Kautschukmischungen coextrudiert werden, sodass sich besonders viele Grenzflächen ergeben, die anderenfalls zu Schwachstellen in der Verbundfestigkeit führen könnten. Bevorzugt ist deshalb ein erfindungsgemäßes Verfahren, wobei drei oder mehr, bevorzugt vier oder mehr, besonders bevorzugt fünf oder mehr, vulkanisierbare Kautschukmischungen coextrudiert werden, wobei sämtliche Ausformöffnungen jeweils von zumindest einer anderen Ausformöffnung durch ein Strukturelement voneinander getrennt sind, welches auf beiden Seiten eine zueinander komplementäre makroskopische Struktur aufweist.

In eigenen Experimenten hat sich gezeigt, dass besonders günstige Ergebnisse insbesondere dann erreicht werden, wenn kleinere Strukturelemente an ein größeres Strukturelement angefügt werden sollen, sodass sich im Querschnitt durch das vulkanisierbare Kautschukprodukt eine Ansicht ergibt, in der das erste vulkanisierbare Kautschukprodukt einen größeren Teil der Gesamtfläche einnimmt. Bei entsprechenden Ausführungsformen kann es im Stand der Technik vorkommen, dass die Verbundfestigkeit als besonders nachteilig empfunden wird, sodass die mit dem erfindungsgemäßen Verfahren zu erzielende Verbesserung eine besonders günstige Anwendung des Verfahrens begründet. Bevorzugt ist deshalb ein erfindungsgemäßes Verfahren, wobei die erste vulkanisierbare Kautschukmischung im Querschnitt durch das vulkanisierbare Kautschukprodukt einen Anteil im Bereich von 55 bis 85 %, bevorzugt 60 bis 80 %, besonders bevorzugt 65 bis 75 %, aufweist, bezogen auf die kombinierte Querschnittsfläche der ersten vulkanisierbaren Kautschukmischung und der zweiten vulkanisierbaren Kautschukmischung.

Es kann als Vorteil des erfindungsgemäßen Verfahrens angesehen werden, dass dieses für im Wesentlichen alle relevanten vulkanisierbaren Kautschukmischungen einsetzbar ist. Der Erfinder der vorliegenden Erfindung schlägt insoweit jedoch spezifische Bestandteile für die vulkanisierbaren Kautschukmischungen vor, mit denen sich das erfindungsgemäße Verfahren besonders effizient durchführen lässt.

Bevorzugt ist nämlich ein erfindungsgemäßes Verfahren, wobei die erste vulkanisierbare Kautschukmischung und/oder die zweite vulkanisierbare Kautschukmischung zumindest einen Dienkautschuk umfasst, wobei der Dienkautschuk bevorzugt ausgewählt ist aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, NitrilKautschuk, Acrylat-Kautschuk, Silikon-Kautschuk, Polysulfid-Kautschuk, Epichlorhydrin-Kautschuk, Styrol-Isopren-Butadien-Terpolymer, hydrierter Acrylnitrilbutadienkautschuk, Isopren-Butadien-Copolymer und hydriertem Styrol-Butadien-Kautschuk, wobei der Dienkautschuk besonders bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

Bevorzugt ist zudem ein erfindungsgemäßes Verfahren, wobei die erste vulkanisierbare Kautschukmischung und/oder die zweite vulkanisierbare Kautschukmischung 0,1 bis 200 phr, bevorzugt 0,5 bis 100 phr, eines oder mehrerer Füllstoffe umfasst, wobei die Füllstoffe ausgewählt sind aus der Gruppe bestehend aus polaren und unpolaren Füllstoffen, bevorzugt ausgewählt sind aus der Gruppe bestehend aus Ruß, Aluminiumhydroxid, Titandioxid, Magnesiumoxid, amorphem Siliciumdioxid und Schichtsilikaten, besonders bevorzugt ausgewählt sind aus der Gruppe bestehend aus Ruß und amorphem Siliciumdioxid.

Bevorzugt ist ebenfalls ein erfindungsgemäßes Verfahren, wobei die erste vulkanisierbare Kautschukmischung und/oder die zweite vulkanisierbare Kautschukmischung 0,5 bis 8,0 phr, bevorzugt 0,5 bis 4 phr, besonders bevorzugt 0,5 bis 2 phr, Schwefel umfasst.

Bevorzugt ist darüber hinaus ein erfindungsgemäßes Verfahren, wobei erste vulkanisierbare Kautschukmischung und/oder die zweite vulkanisierbare Kautschukmischung ein oder mehrere Additive umfasst, die ausgewählt sind aus der Gruppe bestehend aus Verstärkerharzen, Methylen-Donoren, Kupplungsagenzien, Haftvermittlern und Weichmachern.

Bevorzugt ist ebenfalls ein erfindungsgemäßes Verfahren, wobei erste vulkanisierbare Kautschukmischung und/oder die zweite vulkanisierbare Kautschukmischung ein oder mehrere weitere Zusatzstoffe umfasst, die ausgewählt sind aus der Gruppe bestehend aus Vernetzern, Schwefelspendern, Beschleunigern, Verzögerern, Ozonschutzmitteln, Alterungsschutzmitteln, Mastikationshilfsmittel, Verarbeitungshilfsmitteln und Aktivatoren, wobei die Gesamtmenge der weiteren Zusatzstoffe vorzugsweise bis zu 150 phr, bevorzugt bis zu 100 phr, besonders bevorzugt 5 bis 50 phr, beträgt.

Aus den mit dem erfindungsgemäßen Verfahren hergestellten vulkanisierbaren Kautschukprodukten können mittels Vulkanisation vulkanisierte Kautschukprodukte erhalten werden, welche vorteilhafterweise über eine ausgezeichnete Verbundfestigkeit zwischen den verschiedenen Gummiwerkstoffen verfügen. Dieses Vulkanisieren kann dabei isoliert für das vulkanisierbare Kautschukprodukt erfolgen, jedoch auch im Zuge der Vulkanisation eines Fahrzeugreifenrohlings, indem das vulkanisierbare Kautschukprodukt zuvor angeordnet wurde, wie es beispielsweise bei der Applikation eines vulkanisierbaren Laufstreifens auf den übrigen Bestandteilen eines grünen Fahrzeugreifenrohlings der Fall ist.

Die Erfindung betrifft entsprechend zudem ein Verfahren zur Herstellung eines vulkanisierten Kautschukprodukts, umfassend die Verfahrensschritte des erfindungsgemäßen Verfahrens zur Coextrusion eines vulkanisierbaren Kautschukprodukts, sowie den Verfahrensschritt:
e) Vulkanisieren des vulkanisierbaren Kautschukprodukts oder eines Fahrzeugreifenrohlings umfassend das vulkanisierbare Kautschukprodukt unter Co-Vulkanisation der ersten vulkanisierbaren Kautschukmischung und der zweiten vulkanisierbaren Kautschukmischung zum Erhalt eines vulkanisierten Kautschukprodukts.

Die Vulkanisation kann dabei unter den üblichen, dem Fachmann aus dem Stand der Technik umfassend bekannten Bedingungen erfolgen, die der Fachmann zwanglos auf die von ihm eingesetzten vulkanisierbaren Kautschukmischungen abstimmt.

Im Lichte der vorstehenden Ausführungen ist für den Fachmann ersichtlich, dass auch das vulkanisierbare Kautschukprodukt bzw. das hieraus mittels Vulkanisation zu gewinnenden vulkanisierte Kautschukprodukt und insbesondere auch ein Fahrzeugreifen, welcher ein solches vulkanisiertes Kautschukprodukt umfasst, beispielsweise als Laufstreifen oder Seitenwand, vorteilhaft ist, da die erfindungsgemäß erhaltenen Kautschukprodukte über eine hohe Verbundfestigkeit zwischen den verschiedenen Kautschukmischungen bzw. Gummiwerkstoffen verfügen und dadurch für den Einsatz in Hochleistungsprodukten besonders geeignet sind, beispielsweise weil sie den im Betrieb von Fahrzeugreifen regelmäßig auftretenden starken mechanischen Belastungen besonders zuverlässig widerstehen können.

Die Erfindung betrifft entsprechend auch ein vulkanisierbares Kautschukprodukt hergestellt oder herstellbar mit dem erfindungsgemäßen Verfahren, umfassend eine erste vulkanisierbare Kautschukmischung und eine zweite vulkanisierbare Kautschukmischung, wobei die erste vulkanisierbare Kautschukmischung und die zweite vulkanisierbare Kautschukmischung im Querschnitt durch das vulkanisierbare Kautschukprodukt eine makroskopisch strukturierte Grenzfläche miteinander aufweisen.

Die Erfindung betrifft folglich auch ein vulkanisiertes Kautschukprodukt, hergestellt oder herstellbar mit dem erfindungsgemäßen Verfahren zur Herstellung eines vulkanisierten Kautschukprodukts und/oder hergestellt oder herstellbar durch Vulkanisation eines erfindungsgemäßen vulkanisierbaren Kautschukprodukts.

Die Erfindung betrifft abschließend auch einen Fahrzeugreifen, insbesondere Fahrzeugluftreifen, umfassend ein erfindungsgemäßes vulkanisiertes Kautschukprodukt. Bevorzugt ist dabei ein erfindungsgemäßer Fahrzeugreifen, wobei der Fahrzeugreifen ein PKW-Reifen oder ein LKW-Reifen ist. Bevorzugt ist auch ein erfindungsgemäßer Fahrzeugreifen, wobei der Fahrzeugreifen ein Reifen für Hochgeschwindigkeitsanwendungen ist.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Darstellung einer Vorschablone, wie sie in einem Verfahren gemäß dem Stand der Technik eingesetzt werden;
- Fig. 2: eine schematische Darstellung einer Vorschablone, wie sie im erfindungsgemäßen Verfahren eingesetzt werden kann, in einer ersten Ausführungsform;
- Fig. 3: eine schematische Darstellung einer Vorschablone, wie sie im erfindungsgemäßen Verfahren eingesetzt werden kann, in einer zweiten Ausführungsform;
- Fig. 4: drei schematische Darstellungen von beispielhaften Strukturelementen mit unterschiedlichen makroskopischen Strukturierungen;
- Fig. 5: eine schematische Darstellung eines zweikomponentigen Seitenwandprofils, welches mit einem Verfahren gemäß dem Stand der Technik erhalten werden kann;
- Fig. 6: eine schematische Darstellung einer zweikomponentigen Seitenwand, wie sie mit dem erfindungsgemäßen Verfahren in einer ersten bevorzugten Ausführungsform erhalten werden kann; und
- Fig. 7: eine schematische Darstellung einer zweikomponentigen Seitenwand, wie sie mit dem erfindungsgemäßen Verfahren in einer zweiten bevorzugten Ausführungsform erhalten werden kann.

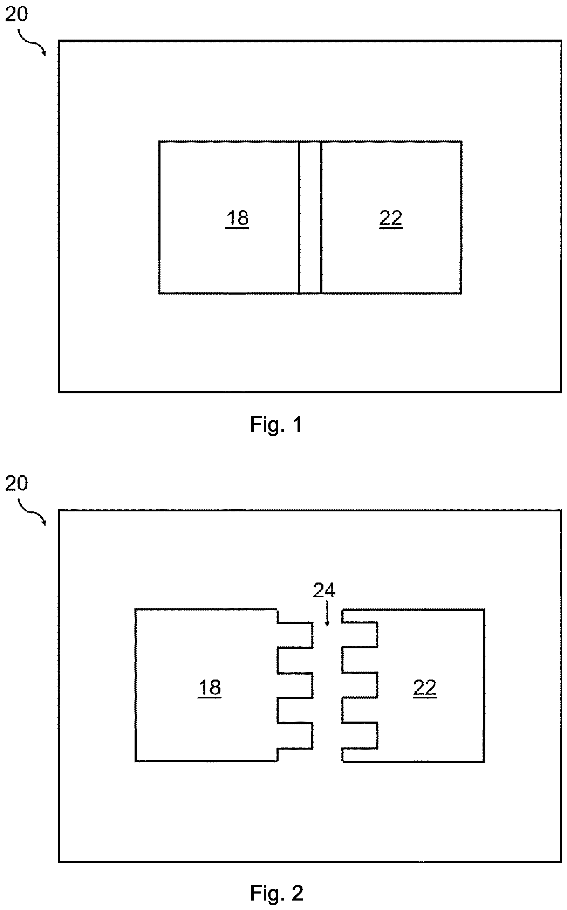

Fig. 1 zeigt eine schematische Darstellung einer beispielhaften Vorschablone 20, wie sie aus dem Stand der Technik bekannt ist. Diese Vorschablone 20 umfasst eine erste Ausformungsöffnung 18 und eine zweite Ausformungsöffnung 22, die voneinander durch einen Steg getrennt sind, der auf seinen Seiten keine makroskopische Struktur aufweist. Durch die erste Ausformungsöffnung 18 wird die erste vulkanisierbare Kautschukmischung 12 und durch die zweite Ausformungsöffnung 22 die zweite vulkanisierbare Kautschukmischung 14 geführt. Von der Vorschablone 20 werden die so geformten strangförmigen Materialien in eine nachgelagerte Endschablone des Extruders überführt und dann gemeinsam als vulkanisierbares Kautschukprodukt extrudiert.

Fig. 2 zeigt im Gegensatz hierzu schematisch eine Vorschablone 20, wie sie in einem erfindungsgemäßen Verfahren eingesetzt werden kann. Die Vorschablone 20 verfügt über ein Strukturelement 24, welches auf beiden Seiten eine zueinander komplementäre makroskopische Struktur aufweist, mit der in die durch die Ausformöffnung geführten vulkanisierbaren Kautschukmischungen komplementäre makroskopische Strukturen eingeprägt werden, sodass im vulkanisierbaren Kautschukprodukt 10 eine makroskopisch strukturierte Grenzfläche 16 erhalten wird.

In der gezeigten Ausführungsform können die Konturen der makroskopischen Strukturelemente durch eine einfache horizontale Verschiebung aufeinander abgebildet werden und sind als stufenförmiger Steg ausgeführt, sodass in vulkanisierbaren Kautschukprodukt 10 eine stufenförmige strukturierte Grenzfläche 16 erhalten wird. In dem gezeigten Beispiel umfasst die makroskopische Struktur jeweils vier Hochpunkte und drei zwischen den Hochpunkten angeordnete Tiefpunkte, wobei der Höhenunterschied im gezeigten Beispiel bei etwa 5 mm liegt, wohingegen der Abstand zwischen zwei benachbarten Hochpunkten etwa 4 mm beträgt. In dem gezeigten Beispiel ist das Strukturelement 24 integraler Bestandteil der Vorschablone 20, die entsprechend einstückig ausgebildet ist.

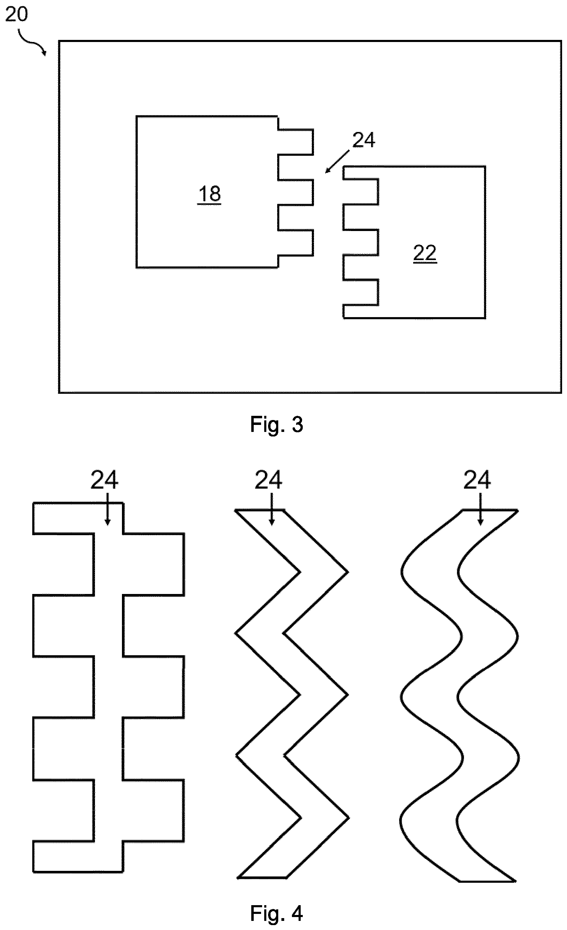

Fig. 3 zeigt eine schematische Darstellung einer zweiten Vorschablone 20, bei der das Strukturelement 24 über eine komplementäre makroskopische Struktur auf beiden Seiten verfügt, diese jedoch in vertikale Richtung gegeneinander verschoben ist, sodass die vorgeformten Materialstränge nach Durchlaufen der Vorschablone 20 zum Erhalt einer optimalen Verbindungslinie noch in vertikaler Richtung zueinander orientiert werden müssen.

Fig. 4 zeigt schematisch drei beispielhafte Ausgestaltungen für Strukturelemente 24 mit unterschiedlichen komplementären makroskopischen Strukturen, wie sie beispielsweise als reversibel und zerstörungsfrei auswechselbare Strukturelemente 24 in einer Vorschablonen 20 eingesetzt werden können.

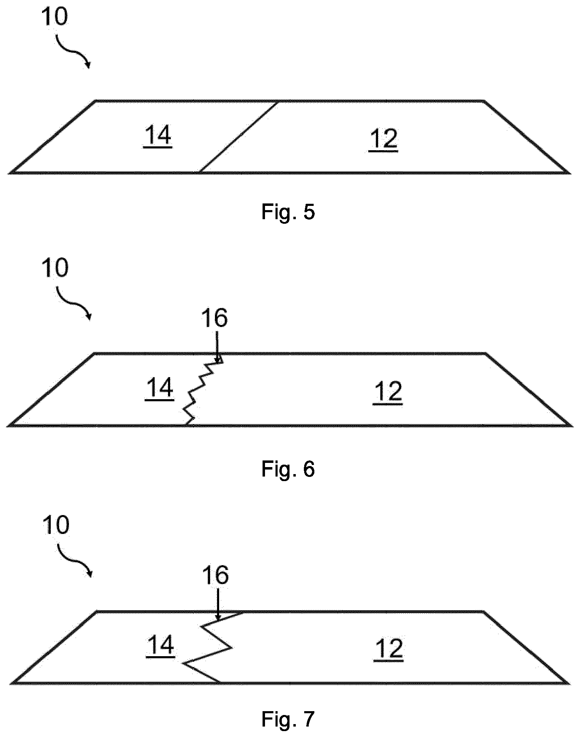

Fig. 5 zeigt schematisch eine zweikomponentige Reifenseitenwand, welche mit einem Verfahren gemäß dem Stand der Technik herstellbar ist. Im Gegensatz hierzu zeigen die Fig. 6 und 7 zweikomponentige Seitenwände für Fahrzeugreifen, welche mit einem erfindungsgemäßen Verfahren erhalten werden können. Bei diesen handelt es sich um vulkanisierbare Kautschukprodukte 10, die aus einer ersten vulkanisierbaren Kautschukmischung 12 und einer zweiten vulkanisierbaren Kautschukmischung 14 bestehen und die im Kontaktbereich eine makroskopisch strukturierte Grenzfläche 16 miteinander aufweisen, die im erfindungsgemäßen Verfahren durch die komplementäre makroskopische Struktur des Strukturelements 24 in die jeweiligen extrudierten Materialstränge eingeprägt wurde.

In dem gezeigten Beispiel umfassen beiden Kautschukmischungen einen Dienkautschuk sowie einen Füllstoff und weisen eine Mooney Viskosität ML (1+3 / 100 °C) gemäß DIN 53523-2-1991 im Bereich von 40 bis 120 MU auf, wobei die Mooney Viskosität der zweiten vulkanisierbaren Kautschukmischung 14 im gezeigten Beispiel etwa 25 MU über der der ersten vulkanisierbaren Kautschukmischung 12 liegt. In den in Fig. 6 und 7 gezeigten Beispielen, welche einen Querschnitt durch die jeweilige Seitenwand darstellen, verläuft die makroskopisch strukturierte Grenzfläche 16 quer zur Extrusionsrichtung vertikal von der Unterseite zur Oberseite des vulkanisierbaren Kautschukprodukts 10 und damit quer zur Richtung der größten Breitenausdehnung. Es ist klar zu erkennen, dass die erste vulkanisierbare Kautschukmischung 12 einen größeren Flächenanteil aufweist als die zweite vulkanisierbare Kautschukmischung 14.

Mit entsprechenden erfindungsgemäßen vulkanisierbaren Kautschukprodukten 10 können durch Ko-Vulkanisation vorteilhafterweise mehrkomponentige vulkanisierte Kautschukprodukte erhalten werden, welche über eine ausgezeichnete Verbundfestigkeit zwischen den zwei Gummiwerkstoffen verfügen und sich damit besonders für den Einsatz in Fahrzeugreifen eignen.

### Bezugszeichenliste

- 10: Vulkanisierbares Kautschukprodukt
- 12: Erste vulkanisierbare Kautschukmischung
- 14: Zweite vulkanisierbare Kautschukmischung
- 16: Strukturierte Grenzfläche
- 18: Erste Ausformungsöffnung
- 20: Vorschablone
- 22: Zweite Ausformungsöffnung
- 24: Strukturelement

## Patentansprüche

1. Verfahren zur Coextrusion eines vulkanisierbaren Kautschukprodukts (10) mit einem Extruder, umfassend die Verfahrensschritte:
a) Herstellen oder Bereitstellen einer ersten vulkanisierbaren Kautschukmischung (12) und einer zweiten vulkanisierbaren Kautschukmischung (14),
b) Vorformen der ersten vulkanisierbaren Kautschukmischung (12) durch eine erste Ausformungsöffnung (18) einer Vorschablone (20) und Vorformen der zweiten vulkanisierbaren Kautschukmischung (14) durch eine zweite Ausformungsöffnung (22) der Vorschablone (20),
c) Kontaktieren der vorgeformten Kautschukmischungen in einer der Vorschablone (20) nachgelagerten Endschablone des Extruders zur Ausbildung einer Grenzfläche zwischen den Kautschukmischungen, und
d) Extrudieren des vulkanisierbaren Kautschukprodukts umfassend die erste vulkanisierbare Kautschukmischung (12) und die zweite vulkanisierbare Kautschukmischung (14),
wobei die erste Ausformungsöffnung und die zweite Ausformungsöffnung in der Vorschablone (20) durch ein Strukturelement (24) voneinander getrennt sind, wobei das Strukturelement (24) auf beiden Seiten eine zueinander komplementäre makroskopische Struktur aufweist, und
wobei das Strukturelement (24) dazu eigerichtet ist, in die durch die Ausformungsöffnungen extrudierten vulkanisierbaren Kautschukmischungen komplementäre makroskopische Strukturen einzuprägen, so dass diese im Querschnitt durch das vulkanisierbare Kautschukprodukt (10) eine makroskopisch strukturierte Grenzfläche (16) miteinander aufweisen.

2. Verfahren nach Anspruch 1, wobei das Strukturelement (24) zumindest abschnittsweise, bevorzugt vollständig, ein wellenförmiger oder stufenförmiger oder zickzackförmiger Steg, bevorzugt ein zickzackförmiger Steg, ist, wobei das Strukturelement (24) dazu eigerichtet ist, in die extrudierten vulkanisierbaren Kautschukmischungen komplementäre wellenförmige oder stufenförmige oder zickzackförmige Strukturen einzuprägen, so dass diese im Querschnitt durch das vulkanisierbare Kautschukprodukt (10) eine wellenförmig oder stufenförmig oder zickzackförmig strukturierte Grenzfläche (16) miteinander aufweisen

3. Verfahren nach einem der Ansprüche 1 oder 2, wobei das Kontaktieren in der Endschablone unter einem erhöhten Druck, bevorzugt von 150 bar oder mehr, besonders bevorzugt 120 bar oder mehr, erfolgt.

4. Verfahren nach einem der Ansprüche 1 bis 3, wobei die erste vulkanisierbare Kautschukmischung (12) und die zweite vulkanisierbare Kautschukmischung (14) eine Differenz der Mooney-Viskosität ML (1+3 / 100 °C) gemäß DIN 53523-2-1991 von 5 MU oder mehr, bevorzugt 10 MU oder mehr, besonders bevorzugt 20 MU oder mehr, aufweisen.

5. Verfahren nach einem der Ansprüche 1 bis 4, wobei das Strukturelement (24) reversibel und zerstörungsfrei lösbar mit der Vorschablone (20) verbunden ist.

6. Verfahren nach einem der Ansprüche 1 bis 5, wobei die makroskopisch strukturierte Grenzfläche (16) im Querschnitt durch das vulkanisierbare Kautschukprodukt (10) in eine Richtung verläuft, die quer zur Extrusionsrichtung und quer zur Richtung der größten Breitenausdehnung des vulkanisierbaren Kautschukprodukts (10) verläuft.

7. Verfahren zur Herstellung eines vulkanisierten Kautschukprodukts, umfassend die Verfahrensschritte des Verfahrens nach einem der Ansprüche 1 bis 6, sowie den Verfahrensschritt:
e) Vulkanisieren des vulkanisierbaren Kautschukprodukts (10) oder eines Fahrzeugreifenrohlings umfassend das vulkanisierbare Kautschukprodukt (10) unter Co-Vulkanisation der ersten vulkanisierbaren Kautschukmischung (12) und der zweiten vulkanisierbaren Kautschukmischung (14) zum Erhalt eines vulkanisierten Kautschukprodukts.

8. Vulkanisierbares Kautschukprodukt (10) hergestellt oder herstellbar mit dem Verfahren nach einem der Ansprüche 1 bis 6, umfassend eine erste vulkanisierbare Kautschukmischung (12) und eine zweite vulkanisierbare Kautschukmischung (14), wobei die erste vulkanisierbare Kautschukmischung (12) und die zweite vulkanisierbare Kautschukmischung (14) im Querschnitt durch das vulkanisierbare Kautschukprodukt (10) eine makroskopisch strukturierte Grenzfläche (16) miteinander aufweisen.

9. Vulkanisiertes Kautschukprodukt, hergestellt oder herstellbar mit dem Verfahren nach Anspruch 7 und/oder hergestellt oder herstellbar durch Vulkanisation eines vulkanisierbaren Kautschukprodukts (10) nach Anspruch 8.

10. Fahrzeugreifen, insbesondere Fahrzeugluftreifen, umfassend ein vulkanisiertes Kautschukprodukt nach Anspruch 9.
